# EUROPEAN PATENT SPECIFICATION

(11) **EP 0 414 358 B1**
(45) Date of publication and mention of the grant of the patent: **17.09.1997**
(21) Application number: 90307380.7
(22) Date of filing: 05.07.1990
(51) Int. Cl.: H01L 27/12, H01L 23/52, G02F 1/136

(54) **An active matrix display board**
Anzeigetafel mit aktiver Matrix
Panneau d'affichage à matrice active

(30) Priority: 05.07.1989 JP 174823/89; 05.07.1989 JP 174824/89; 05.07.1989 JP 174825/89; 11.08.1989 JP 209402/89
(43) Date of publication of application: 27.02.1991
(73) Proprietor: SHARP KABUSHIKI KAISHA, Osaka 545 (JP)
(72) Inventor: Katayama, Mikio, Ikoma-shi, Nara-ken (JP); Negoto, Hidenori, Ikoma-shi, Nara-ken (JP); Kato, Hiroaki, Nara-shi, Nara-ken (JP); Imaya, Akihiko, Nara-shi, Nara-ken (JP); Kanemori, Yuzuru, Tenri-shi, Nara-ken (JP); Nakazawa, Kiyoshi, Fujiidera-shi, Osaka (JP)
(74) Representative: Brown, Kenneth Richard

(56) References cited:
- EP-A- 0 318 224
- GB-A- 2 008 304
- PROC. 1988 INTERNATIONAL DISPLAY RESEARCH CONFERENCE IEEE, New York, Us, 1988, pp. 155-158; E. TAKEDA et al.: 'An amorphous Si TFT array with TaOx/SiNx double layered insulator for liquid crystal displays'
- SID 88 DIGEST, 1988, Los Angeles, US, pp. 310-313; M. KATAYAMA et al.: 'High-resolution full-color LCDs addressed by double-layered gate-insulator a-Si TFTs'
- PATENT ABSTRACTS OF JAPAN, vol. 13, no. 212 (P-873)(3560), 18 May 1989; & JP-A-0129821

## Description

### BACKGROUND OF THE INVENTION

### 1. Field of the invention:

This invention relates to an active matrix display board for use in combination with a display medium, such as a liquid crystal display, for construction of a display apparatus.

### 2. Description of the prior art:

An active matrix driving technique in which pixel electrodes arranged in a matrix fashion on an insulating substrate are independently driven has been employed in display apparatuses using liquid crystals. More especially, the active matrix driving technique has often been used in large-size display apparatuses having a high-density display function.

For use as a switching element for selectively driving the pixel electrodes there are generally known TFT (thin film transistor) elements, MIM (metal-insulating layer-metal) elements, MOS transistor elements, diodes, or varistors. The active matrix driving technique permits high-contrast display and has already been actually incorporated in liquid-crystal TV sets, word processors, computer terminal display units, etc.

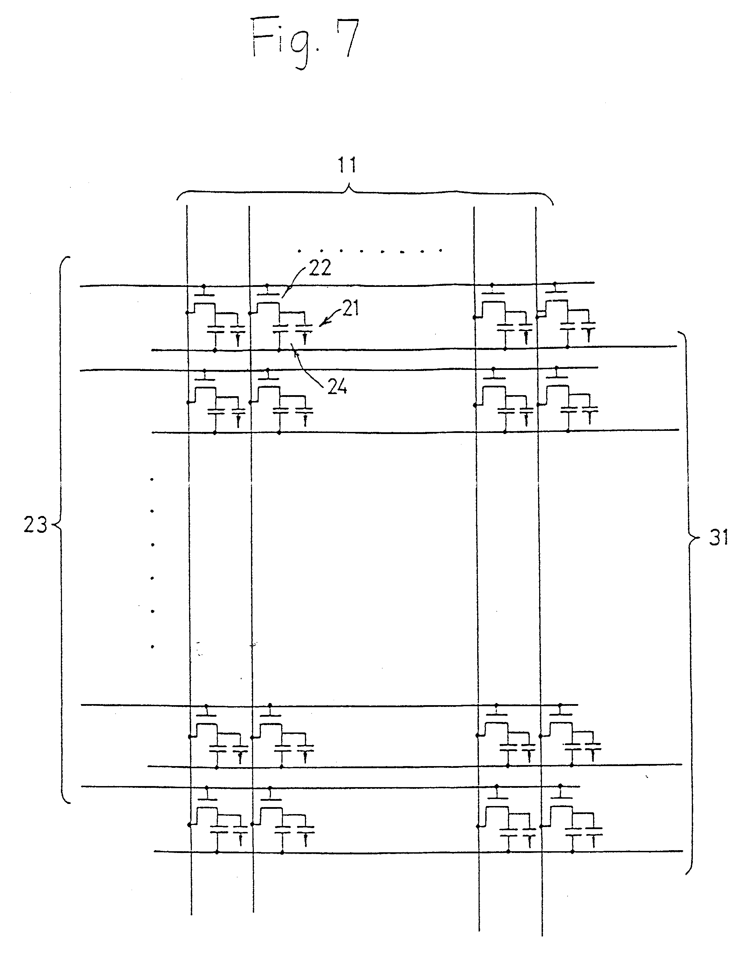

A circuit diagram for an active matrix display apparatus in which a TFT is used as a switching element is schematically shown in Figure 7. A TFT **22** is disposed in the vicinity of each point of intersection between a plurality of parallel gate bus lines **23** acting as scan lines and a plurality of source bus lines **11** intersecting the lines **23** which act as signal lines. A pixel electrode is connected to the TFT **22**, and between the pixel electrode and a counter electrode there is formed a picture element **21**. An addition capacity **24** is formed between the pixel electrode and an addition capacity electrode.

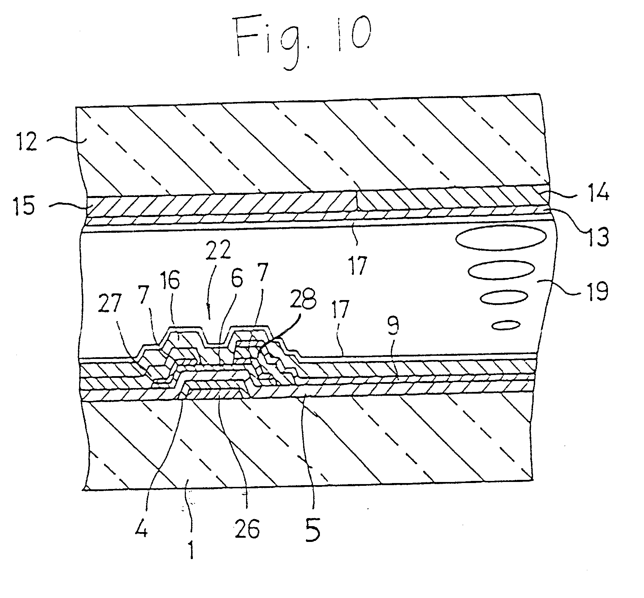

Figure 8 is a plan view showing a conventional active matrix board and Figures 11 and 12 are sectional views showing an active matrix display apparatus taken along lines A-A and B-B in Figure 8, respectively. Parallel gate bus lines **23** are formed on a glass substrate **1** and, in intersecting relation with the lines **23**, there are formed source bus lines **11**. A gate insulation film **5** (Figure 11) which will be described hereinafter is sandwiched between each gate bus line **23** and each source bus line **11**.

A TFT **22** as a switching element is disposed adjacent each point of intersection between each gate bus line **23** and a source bus line **11**. A gate electrode **26** of the TFT **22** is connected to the gate bus line **23**, and a source electrode **27** of the TFT **22** is connected to the source bus line **11**. A drain electrode **28** of the TFT **22** is connected to a pixel electrode **9**.

An addition capacity line **31** is arranged in parallel to the gate bus line **23** and along a side of the pixel electrode **9** which is opposite to its side nearer to the gate bus line **23**. An addition capacity electrode **32** is connected to the addition capacity line **31**, the electrode **32** being opposed to the pixel electrode **9** so as to sandwich a gate insulation film **5** therebetween. An addition capacity **24** is formed between the addition capacity electrode **32** and the pixel electrode **9**.

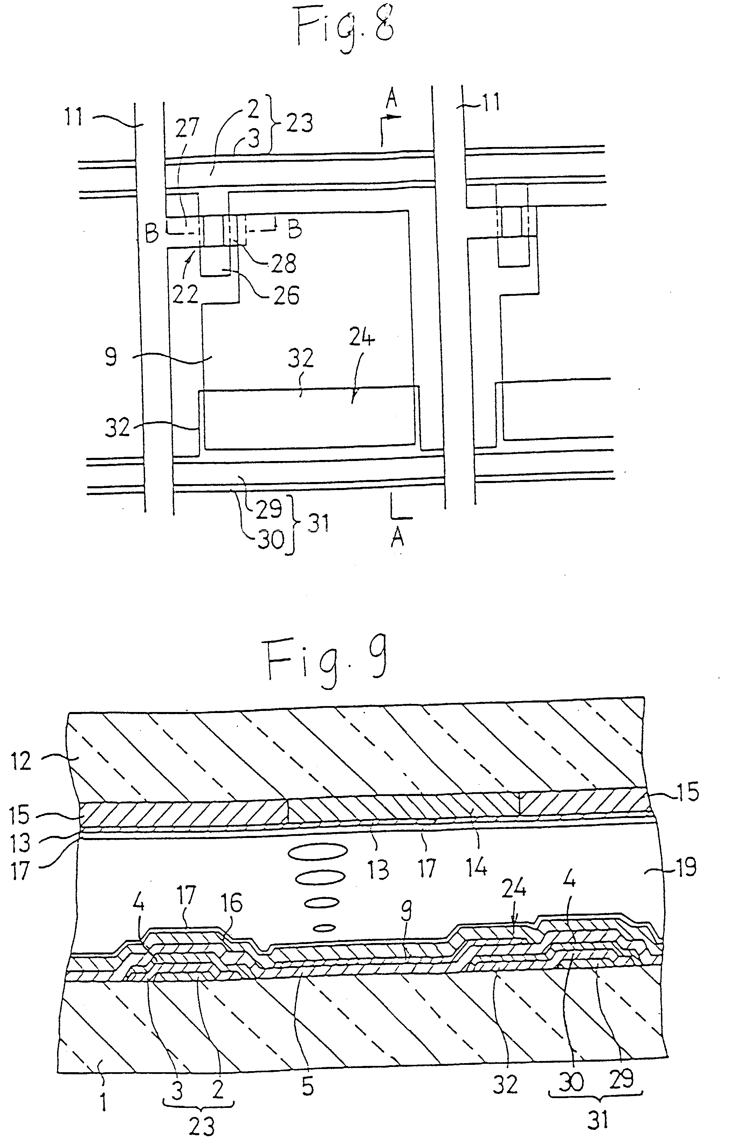

Sectional configurations of the gate bus line **23**, addition capacity **24**, and addition capacity line **31** will be explained with reference to Figure 9. The gate bus line **23** consists of two layers, namely, a lower gate bus line **2** (2000 Å thick) [10Å = 1 nm] and an upper gate bus line **3** (2500 Å thick). Likewise, the addition capacity line **31** consists of two layers, namely, a lower capacity bus line **29** (2000 Å thick) and an upper capacity bus line **30** (2500 Å thick). The lower gate bus line **2** and the lower capacity bus line **29** can be simultaneously pattern-formed. The lower gate bus line **2** and the lower capacity bus line **29** are both formed of a low-resistance metal, such as Mo or Al.

For both the upper gate bus line **3** and the upper capacity bus line **30** Ta metal that can form an anodized film is used. Metals such as Mo or Al, used for formation of the lower gate line **2** and lower capacity bus line **29** are less resistant to corrosion due to the action of fluoric acids used as an etchant in a later process of the formation of TFT **22**, and therefore the upper gate line **3** is so formed as to completely cover the lower gate line **2** for protection thereof. Likewise, the upper capacity bus line **30** is so formed as to completely cover the lower capacity bus line **29**.

As above stated, both the gate bus line **23** and the addition capacity line **31** are composed of two layers and both the lower gate line **2** and the lower capacity bus line **29** are formed from such metals as Mo or Al, whereby the specific resistance of the lines **23** and **31** can be lowered. Thus, it is possible to solve the problem of signal delay on the lines **23** and **31** which may arise in a larger-sized display apparatus. Moreover, the formation of an anodized layer on the upper surfaces of the lines **23** and **31** can reduce the possibility of a defective isolation occurrence with respect to the lines **23**, **31**.

The upper capacity bus line **30** is connected, at its portion parallel to one side of the pixel electrode **9**, to the addition capacity electrode **32** located below the pixel electrode **9**. The upper gate line **3**, upper capacity bus line **30**, and addition capacity electrode **32** are simultaneously pattern-formed. Therefore, the addition capacity electrode **32** is also formed from Ta.

On the upper gate line **3**, upper capacity bus line **30**, and addition capacity electrode **32**, an anodized film **4** (3000 Å thick) of Ta₂O₅ is formed by anodizing their respective upper surfaces. A gate insulating film **5** (3000 Å thick) of SiNₓ (silicon nitride) is formed on the entire surface of the substrate to cover the anodized film **4**. A pixel electrode **9** (1000 Å thick) made of ITO is formed on the gate insulating film **5**. An addition capacity **24** is formed between the pixel electrode **9** and the addition capacity electrode **32** that faces the pixel electrode **9** so as to sandwich the gate insulating film **5** therebetween. Further, a protective film **16** (3000 Å thick) of SiNₓ and an orientation film **17** are laid so as to completely cover the substrate, resulting in an active matrix board.

On a glass base **12** placed counter to the substrate **1** are provided a color filter **14** and black stripes **15** and, in addition, formed all over thereon are counter electrodes **13** made of ITO and an orientation film **17**, resulting in an active matrix display apparatus.

TFT **22** will be explained according to the process of fabrication, with reference to Figure 10. Gate electrodes **26** of Ta metal are formed simultaneously with the above mentioned gate lines **3**, upper capacity bus lines **30**, and addition capacity electrodes **32**. The gate electrodes **26** are anodized simultaneously with the lines **3**, **30** and electrodes **32**, an anodized film **4** being thus formed on the gate electrodes **26**. A gate insulating film **5** is formed over the substrate **1** to completely cover the anodized film **4**.

Next, an intrinsic semiconductor amorphous silicon (hereinafter referred to as "a-Si(i)") layer (1000 Å thick) is deposited on each gate electrode **26** so as to sandwich a gate insulating film **5** therebetween, the a-Si(i) layer functioning as a semiconductor layer **6**. Moreover, on the a-Si(i) layer is deposited an n-type semiconductor amorphous silicon (hereinafter referred to as "a-Si(n⁺)") layer (500 Å thick) which functions as contact layers **7**.

Then, patterning is carried out on the a-Si(i) layer and the a-Si(n⁺) layer simultaneously to form a semiconductor layer **6** and contact layers **7**. At this point of time, there is a portion yet to be removed by etching between the two contact layers **7**, and therefore the two contact layers **7** are still connected to each other by that portion.

A Ti metal layer (3000 Å thick) is placed all over the substrate and then patterning is effected on the Ti metal layer to form source electrodes **27** and drain electrodes **28**. Simultaneously, the a-Si(n⁺) layer between the contact layers **7** is removed by etching. Pixel electrodes **9** (1000 Å thick) made of ITO are pattern-formed on the drain electrodes **28** and gate insulating film **5**. Further, the aforesaid protective film **16** and orientation film **17** are formed on the entire surface of the substrate.

In the above exemplified process, TFT **22** is formed only after the upper gate lines **3** and upper capacity bus lines **30** of Ta metal, anodized film **4**, and gate insulating film **5** are formed on the lower gate lines **2** and lower capacity bus lines **29** of Mo or Al. Despite the fact that in this way three layers of films are formed on the lower gate lines **2** and lower capacity bus lines **29**, there may be cases in which lower gate lines **2** and lower capacity bus lines **29** are eroded and become flattened out during the process of TFT **22** fabrication. Such erosion arises from pinholes developed in upper gate lines **3** and upper capacity bus lines **30**, anodized film **4**, and gate insulating film **5**. The Mo or Al metal of which the lower gate lines **2** and lower capacity bus lines **29** are formed is, as already stated, less resistant to the action of a fluoric acid used as an etchant in the process of TFT **22** formation, and therefore the metal is easily eroded if any such pinhole is present therein. Such erosion may occur over a long distance along the length of each gate bus line **23** and each addition capacity line **31**. Such erosion leads to troubles, such as increased resistance, line breakdown, and peeling, with respect to the gate bus lines **23** and addition capacity lines **31**. Moreover, such erosion also leads to line breakdown, peeling, etc., with respect to the source bus lines **11**.

EP-A-0 318 224 discloses an active matrix substrate for a liquid crystal display corresponding to the preamble of claim 1, in which a gate line and a source line are insulated from each other at their intersection by an a-Si(i)/a-Si(n⁺) layer and covered by an etching stop layer.

JP-A-1 29821 discloses a thin film FET element array in which a gate line is made of a three-layered structure consisting successively of i-type amorphous silicon, silicon nitride and aluminium, the gate line crossing over a drain electrode line and a source electrode.

### SUMMARY OF THE INVENTION

This invention is defined by independent claim 1, the preamble of which relates to the prior art described above with reference to Figures 7 to 10. The dependent claims 2 to 6 are directed to preferred embodiments of the invention.

The invention disclosed herein makes possible the objectives of (1) providing an active matrix display board that has scan lines less liable to troubles such as increased resistances, line breakdowns, and peelings in the stage of etching; (2) providing an active matrix board that has additional capacity lines less liable to troubles such as increased resistances, line breakdowns, and peelings; and (3) providing an active matrix board that makes it possible to manufacture display apparatuses at higher yields and thus reduce the cost of manufacturing such apparatuses.

### BRIEF DESCRIPTION OF THE DRAWINGS

Figure 1 is a plan view showing an active matrix board of this invention.

Figure 2 is a sectional view taken along the line II-II in Figure 1.

Figure 3 is a plan view showing another active matrix board of this invention.

Figure 4 is a sectional view taken along the line IV-IV in Figure 3.

Figure 5 is a plan view showing still another active matrix board of this invention.

Figure 6A is a sectional view taken along the line VI-VI in Figure 5.

Figure 6B is a sectional view taken along the line B-B in Figure 5.

Figure 7 is a circuit diagram showing a conventional active matrix display apparatus.

Figure 8 is a plan view showing a conventional active matrix board.

Figure 9 is a sectional view taken along the line A-A in Figure 8.

Figure 10 is a sectional view taken along the line B-B in Figure 8.

### DESCRIPTION OF THE PREFERRED EMBODIMENTS

### Example 1

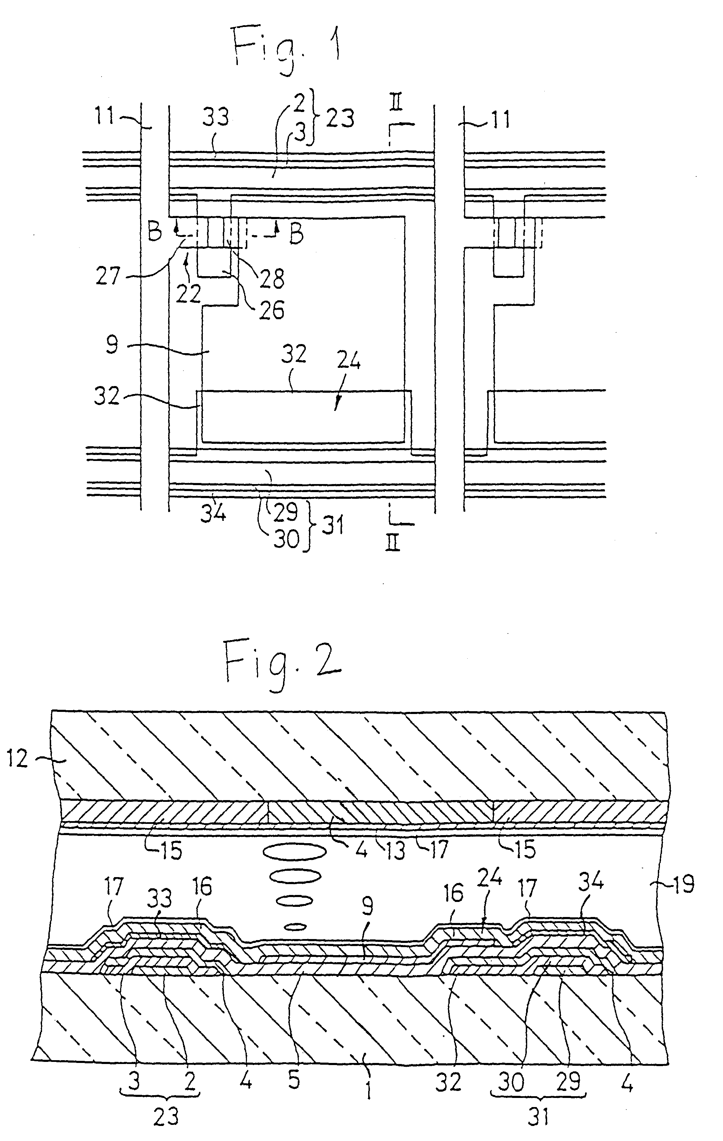

Figure 1 shows an active matrix display board of this invention. Figure 2 shows a sectional view taken along line II-II in Figure 1. The sectional view taken along line B-B in Figure 1 is similar to the view shown in Figure 10 mentioned in the prior art. Pixel electrodes **9** are arranged in a matrix fashion on a glass base **1** or an insulating substrate, and between the individual pixel electrodes **9** there are formed gate bus lines **23** which function as scan lines. Source bus lines **11** which function as signal lines are arranged in an intersecting relation to the gate bus lines **23**. A gate insulating film **5** is placed on the gate bus lines **23** to cover the lines **23**, the film **5** being formed over theentire surface of the substrate. The source bus lines **11** are formed on the gate insulating film **5**.

A TFT **22** which functions as a switching element is disposed adjacent to each intersecting point between each gate bus line **23** and each source bus line **11**. A gate electrode **26** of the TFT **22** is connected to the gate bus line **23**, and a source electrode **27** of the TFT **22** is connected to the source bus line **11**. A drain electrode **28** of the TFT **22** is connected to a corresponding pixel electrode **9**.

An addition capacity line **31** extends along one side of the pixel electrode **9** which is opposite to the other side thereof that is nearer to the gate bus line **23**, and in a parallel relation to the gate bus line **23**. Connected to the addition capacity line **31** is an addition capacity electrode **32** which is opposed to the pixel electrode **9** so as to sandwich the gate insulating film **5** therebetween. An addition capacity **24** is provided between the addition capacity electrode **32** and the pixel electrode **9**.

Sectional configurations of the gate bus line **23**, addition capacity **24**, addition capacity line **31**, and TFT **22** will be explained according to the process of fabrication employed, with reference to Figures 2 and 12. A lower gate line **2** (2000 Å thick) and a lower capacity bus line **29** (2000 Å thick) were first formed, and then an upper gate line **3** (2500 Å thick) and an upper capacity bus line **30** (2500 Å thick) were formed. In the present example, each gate bus line **23** consists of two layers, namely, a lower gate line **2** and an upper gate line **3**. Likewise, each addition capacity line **31** consists of two layers, namely, a lower capacity bus line **29** and an upper capacity bus line **30**. The lower gate line **2** and the lower capacity bus line **29** are pattern-formed simultaneously. For the formation of lower gate lines **2** and lower capacity bus lines **29**, a metal of low resistivity, such as Mo or Al is used. In the present example, Mo was used.

A Ta metal that can form an anodized film is used for upper gate lines **3** and upper capacity bus lines **30**. In order to protect the lower gate lines **2**, the upper gate lines **3** are so formed as to completely cover the lines **2**. Likewise, the upper capacity bus lines **30** are so formed as to completely cover the lower capacity bus lines **29**. Gate electrodes **26** and addition capacity electrodes **32** were formed simultaneously with the upper gate lines **3** and upper capacity bus lines **30**. Therefore, the gate electrodes **26** and addition capacity electrodes **32** are also formed from Ta.

The upper gate lines **3**, gate electrodes **26**, upper capacity bus lines **30**, and addition capacity electrodes **32** were anodized to form an anodized film **4** (3000 A thick) of Ta₂O₅ thereon. Further, a gate insulating film **5** of SiNₓ (3000 Å thick) was formed to completely cover the substrate **1** with the anodized film **4**.

Then, an a-Si(i) layer (1000 Å thick) was placed over the gate insulating film **5**. The a-Si(i) layer functions as a semiconductor layer **6** for TFTs **22**, a first protective layer **33** on the gate bus lines **23**, and a protective layer **34** on the addition capacity lines **31**. Then, an a-Si(n⁺) layer (500 Å thick) which functions as contact layers **7** was placed over the a-Si(i) layer.

In the present example, as stated above, the gate insulating film **5** for TFTs **22** was used as an insulating film for covering the gate bus lines **23** and addition capacity lines **31**, and the protective layers **33** and **34** were formed from the same material as the semiconductor layer **6** that is a layer present immediately above the gate insulating film **5**.

Then, the a-Si(i) layer and the a-Si(n⁺) layer were simultaneously subjected to etching in order to provide a semiconductor layer **6** and contact layers **7**. In this case, the a-Si(i) layer and the a-Si(n⁺) layer were left unremoved with respect to portions thereof in areas in which the above-mentioned semiconductor layer **6** was to be formed, as well as in areas above the gate bus lines **23** and addition capacity lines **31**. In this etching process, therefore, an upper gate line **3**, an anodized film **4**, a gate insulating film **5**, a first protective layer **33** of a-Si(i), an a-Si(n⁺) layer, and a resist were present above each lower gate line **2** of Mo. Similarly, an upper capacity bus line **30**, an anodized film **4**, a gate insulating film **5**, a protective layer **34** of a-Si(i), an a-Si(n⁺) layer, and a resist were present above each lower capacity bus line **29**.

Since a number of layers are present one over another in this way, the lower gate line **2** and lower capacity bus line **29**, both of Mo metal, cannot easily be corroded even if a pinhole is present in any of these layers.

Next, etching was effected of the a-Si(n⁺) layer only to carry out patterning for the contact layers **7**. By this etching operation were removed the a-Si(n⁺) layer present above the protective layers **33**, **34** and the a-Si(n⁺) layer present between the contact layers **7** were simultaneously removed.

In this etching stage, the upper gate line **3**, anodized film **4**, gate insulating film **5** and, in addition, the first protective layer **33** for the a-Si(i) layer are present above the lower gate line **2**. Likewise, the upper capacity bus line **30**, anodized film **4**, gate insulating film **5** and, in addition, the protective layer **34** for the a-Si(i) layer are present above the lower capacity bus line **29**.

In this etching stage, too, since a number of layers are present one over another in this way, the lower gate line **2** and lower capacity bus line **29** cannot easily be eroded. Such protective effects of the protective layers **33**, **34** against the etchant can be recognized in the subsequent etching stage as well.

A Ti metal layer (3000 Å thick) was laid over the entire surface of the substrate, and then the Ti metal layer was subjected to etching. Thus, source electrodes **27**, drain electrodes **28**, and source bus lines **11** were pattern-formed on the contact layers **7**. In this case, the portion between the contact layers **7** is again exposed to the etchant, whereupon all a-Si(n⁺) layer residue, if any, is completely removed.

Next, pixel electrodes **9** (1000 Å thick) made of ITO were pattern-formed above the drain electrodes **28** and gate insulating film **5**. Then, the aforesaid protective layer **16** and orientation film **17** were laid over the substrate **1**, and thus the active matrix board of the invention was obtained.

In the foregoing etching stage for Ti metal and ITO layers as well, since protective layers are present, one over another, as above mentioned, the lower gate lines **2** and the lower capacity bus lines **29**, both of Mo metal, can be effectively protected from the action of the etchant.

Color filters **14** and black stripes **15** are provided on a glass base **12** disposed opposite to the substrate **1**. Further, counter electrodes **13** for ITO and an orientation film **17** are formed all over, and thus an active matrix display apparatus is obtained.

### Example 2

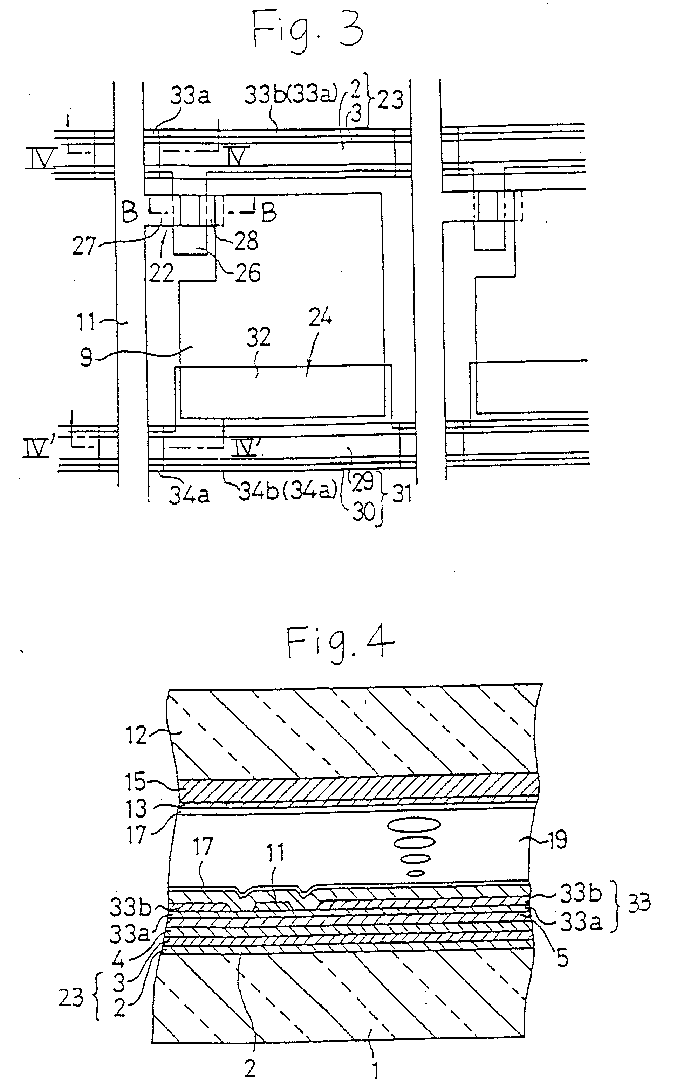

Figure 3 is a plan view showing another active matrix display board according to the invention. Figure 4 shows a sectional configuration of gate bus lines **23** taken along line IV-IV in Figure 3. The sectional configuration of addition capacity lines **31** taken along line IV'-IV' in Figure 3 is similar to the sectional configuration shown in Figure 4. A section taken along line B-B in Figure 3 is similar to the section shown in Figure 12 for explanation of the prior art arrangement. The active matrix display board of the present example is of the same arrangement as the one shown in Example 1, except that the protective layer **33** consists of a first protective layer **33a** and a second protective layer **33b**, and that the protective layer **34** consists of a fourth protective layer **34a** and a fifth protective layer **34b**.

Sectional configurations of gate bus lines **23**, addition capacity lines **31**, and TFTs **22** will be explained according to the process of fabrication, with reference to Figures 4 and 10. In the same manner as in the foregoing Example 1, a lower gate line **2** (2000 Å thick) and a lower capacity bus line **29** (2000 Å thick) were first formed, and then an upper gate line **3** (2500 Å thick) and an upper capacity bus line **30** (2500 Å thick) were formed. In the section taken along line IV'-IV' in Figure 3, a lower capacity bus line **29**, an upper capacity bus line **30**, and an addition capacity line **31** are placed instead of the lower gate line **2**, upper gate line **3**, and gate bus line **23** respectively in Figure 4.

Next, the upper gate line **3**, gate electrode **26**, upper capacity bus line **30**, and addition capacity electrode **32** were anodized and an anodized film **4** of Ta₂O₅ (3000 Å thick) was thus formed thereon. Then, a gate insulating film **5** of SiNₓ (3000 Å thick) was formed over the substrate 1 to cover the anodized film **4**.

Subsequently, an a-Si(i) layer (1000 Å thick) was deposited on the gate insulating film **5**. The a-Si(i) layer functions as a semiconductor layer **6** for TFTs **22**, a first protective layer **33a** on the gate bus line **23**, and a fourth protective layer **34a** on the addition capacity line **31**. Then, an a-Si(n⁺) layer (500 Å thick) was placed over the a-Si(i) layer. The a-Si(n⁺) layer functions as a second protective layer **33b**, contact layers **7** and a fifth protective layer **34b**. In the section taken along line IV'-IV' in Figure 3, the fourth protective layer **34a** and fifth protective layer **34b** are placed instead of the first protective layer **33a** and second protective layer **33b** respectively in Figure 4.

In the present example, as stated above, the gate insulating film **5** for TFTs **22** was used as an insulating film for covering the gate bus lines **23** and addition capacity lines **31**, and the first and fourth protective layers **33a** and **34a** were formed from the same material as the semiconductor layer **6** that is a layer present immediately above the gate insulating film **5**; and the second and fifth protective layers **33b** and **34b** were formed from the same material as the contact layer **7** that is a layer present between the source electrodes **27** and drain electrodes **28** for TFTs **22** and a layer present immediately above the gate insulating film **5** (i.e., the semiconductor layer **6**).

Subsequently, the a-Si(i) layer and the a-Si(n⁺) layer were simultaneously subjected to etching in order to provide a semiconductor layer **6** and contact layers **7**. In this case, the a-Si(i) layer and the a-Si(n⁺) layer were left unremoved with respect to portions thereof in areas in which the above-said semiconductor layer **6** was to be formed, as well as in areas above the gate bus lines **23** and addition capacity lines **31**. In this stage of etching, therefore, an upper gate line **3**, an anodized film **4**, a gate insulating film **5**, a first protective layer **33a** of a-Si(i), a second protective layer **33b** of a-Si(n⁺), and a resist were present above each lower gate line **2** of Mo metal. Likewise, an upper capacity bus line **30**, an anodized film **4**, a gate insulating film **5**, a fourth protective layer **34**a of a-Si(i), a fifth protective layer **34b** of a-Si(n⁺), and a resist were present above each lower capacity bus line **29**.

Since such numerous layers are present one over another, the lower gate line **2** and lower capacity bus line **29**, both of Mo metal, cannot easily be eroded even if a pinhole is present in any of these layers.

Next, etching was effected of the a-Si(n⁺) layer only to carry out patterning for the contact layers **7**. By this etching operation the a-Si(n⁺) layer present above the first and fourth protective layers **33a** and **34a** over the areas in which the gate bus lines **23** and addition capacity lines **31** intersect the source bus lines **11**, and the a-Si(n⁺) layer present between the contact layers **7**, were simultaneously removed.

In this etching stage, the upper gate line **3**, anodized film **4**, gate insulating film **5** and, in addition, the first protective layer **33a** for the a-Si(i) layer are present above the area in which the lower gate line **2** intersect the source bus line **11**. Likewise, the upper capacity bus line **30**, anodized film **4**, gate insulating film **5** and, in addition, the fourth protective layer **34a** for the a-Si(i) layer are present above the area in which the lower capacity bus line **29** intersects the source bus line **11**.

The upper gate line **3**, anodized film **4**, gate insulating film **5**, first protective layer **33a** for the a-Si(i) layer, second protective layer **33b** for the a-Si(n⁺) layer, and the resist are present, one over another, above the area in which the lower gate line **2** does not intersect the source bus line **11**. Likewise, the upper capacity bus line **30**, anodized film **4**, gate insulating film **5**, fourth protective layer **34a** for the a-Si(i) layer, and fifth protective layer **34b** for the a-Si(n⁺) layer were present, one over another, above the area in which the lower capacity bus line **29** does not intersect the source bus line **11**.

In this etching stage, since many layers are present one over another in this way, the lower gate line **2** and the lower capacity bus line **29**, both of Mo metal, cannot easily be eroded.

Moreover, the Ti metal layer was etched to pattern-form source electrodes **27**, drain electrodes **28**, and source bus lines **11**, and thereafter pixel electrodes **9** made of ITO were pattern-formed by etching. In this stage of Ti metal and ITO etching, a good protective effect against the action of the etchant was equally observed with respect to both the first and second protective layers **33a**, **33b** and the first and second protective layers **34a**, **34b**. The active matrix board shown in this example is obtainable after further stages for fabrication are carried out in the same way as in Example 1.

### Example 3

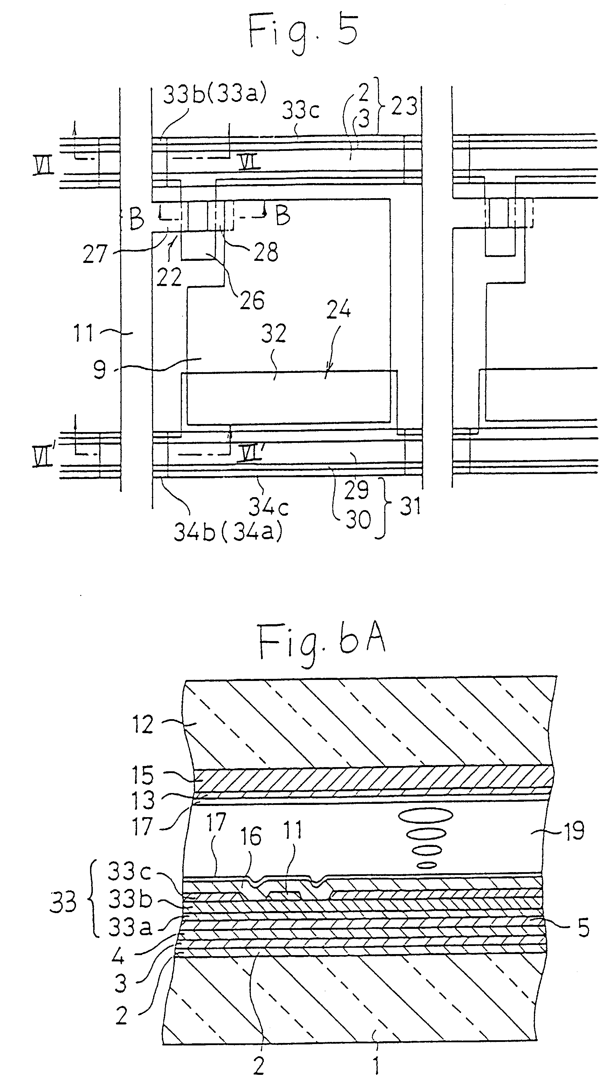

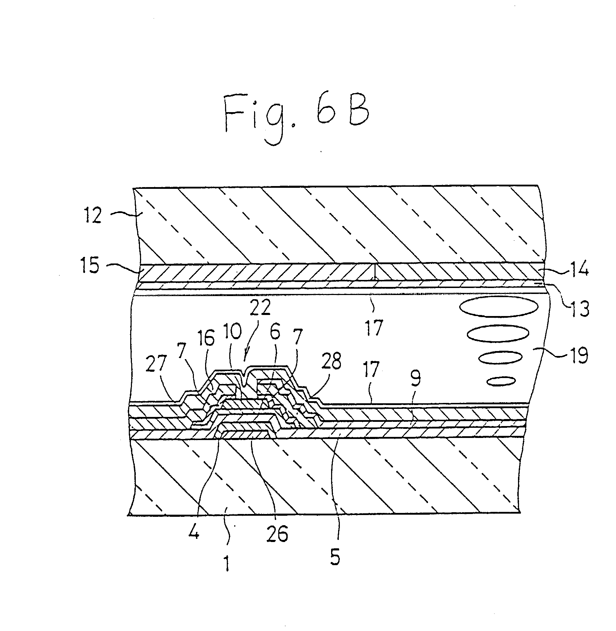

Figure 5 is a plan view showing still another active matrix display board according to the invention. Figure 6A is a view showing the sectional configuration of a gate bus line **23** taken along the line VI-VI in Figure 5. The sectional configuration of an addition capacity line **31** taken along the line VI'-VI' in Figure 5 is similar to the configuration shown in Figure 6A. Figure 6B is a view showing the sectional configuration of the TFT **22** taken along the line B-B in Figure 5. The active matrix display board in this example is of the same arrangement as the one shown in Example 1, except that the protective layer **33** consists of a first protective layer **33a**, a second protective layer **33b**, and a third protective layer **33c**, that the protective layer **34** consists of a fourth protective layer **34a**, a fifth protective layer **34b**, and a sixth protective layer **34c**, and that a protective layer **10** for protecting a semiconductor layer **6** that underlies the said protective layer **10** (hereinafter, referred to as a semiconductor layer protective layer **10**) is formed.

Sectional configurations of each gate bus line **23**, each addition capacity line **31**, and each TFT **22** will be explained according to the process of fabrication employed, with reference to Figures 6A and 6B. In the same manner as in the above-described Example 2, lower gate lines **2**, lower capacity bus lines **29**, upper gate lines **3**, gate electrodes **26**, addition capacity electrodes **32** (Figure 5), and upper capacity bus lines **30** (Figure 5) were pattern-formed. Then, an anodized film **4** was formed on the upper gate lines **3**, gate electrodes **26**, upper capacity bus lines **30**, and addition capacity electrodes **32**, and a gate insulating film **5** of SiNₓ was formed over the substrate 1 to cover the anodized film **4**.

Next, an a-Si(i) layer (1000 Å thick) was placed on the gate insulating film **5**. The a-Si(i) layer functions as a semiconductor layer **6** for TFTs **22**, a first protective layer **33a**, and a fourth protective layer **34a**. Subsequently, an SiNₓ layer (2000 Å thick) was placed over the a-Si(i) layer. Patterning of the SiNₓ layer was carried out to form a semiconductor layer protective layer **10** for TFTs **22**, a second protective layer **33b**, and a fifth protective layer **34b**. The second and fifth protective layers **33b** and **34b** were formed so as to cover the gate bus lines **23** and the addition capacity lines **31** respectively. Then, an a-Si(n⁺) layer (500 Å thick) was placed over the substrate **1** to cover the semiconductor layer protective layer **10**, second protective layer b, and fifth protective layer **34b**. The a-Si(n⁺) layer functions as contact layers **7**, a third protective layer **33c**, and a sixth protective layer **34c**. In the section taken along the line VI'-VI' in Figure 5, the fourth protective layer **34a**, fifth protective layer **34b**, and sixth protective layer **34c** are placed instead of the first protective layer **33a**, second protective layer **33b**, and third protective layer **33c** respectively in Figure 6A.

In the present example, as above stated, the gate insulating film **5** for TFTs **22** was utilized as an insulating film for covering the gate bus lines **23** and addition capacity lines **31**, and the first and fourth protective layers **33a** and **34a** were formed from the same material as the semiconductor layer **6**, present immediately above the gate insulating film **5**. The second and fifth protective layers **33b** and **34b** were formed from the same material as the semiconductor layer protective layer **10**, a layer centrally present immediately above a layer right above the gate insulating film **5**. The third and sixth protective layers **33c** and **34c** were formed from the same material as the one contact layer **7** located between the source electrodes **27** and drain electrodes **28** for TFTs **22** and the semiconductor layer **6** that is present immediately above the gate insulating film **5**.

Next, the a-Si(i) layer and the a-Si(n⁺) layer were subjected to etching simultaneously in order to form a semiconductor layer **6** and contact layers **7**. In this case, the a-Si(i) layer and the a-Si(n⁺) layer were left unremoved with respect to their portions in areas in which a semiconductor layer **6** was to be formed and also in areas above the gate bus lines **23** and addition capacity lines **31**. In this etching stage, therefore, an upper gate line **3**, an anodized film **4**, a gate insulating film **5**, a first protective layer **33**a of a-Si(i), a second protective layer **33b** of SiNₓ, a third protective layer **33c** of a-Si(n⁺), and a resist are present above each lower gate line **2** of Mo metal. Similarly, an upper capacity bus line **30**, an anodized film **4**, a gate insulating film **5**, a fourth protective layer **34a** of a-Si(i), a fifth protective layer **34b** of SiNₓ, a sixth protective layer **34c** of a-Si(n⁺), and a resist are present above each lower capacity bus line **29**. Since such numerous layers are present one over another, the lower gate line **2** and lower capacity bus line **29**, each of Mo metal, cannot easily be eroded even if pinholes are present in any of these layers.

Next, etching was effected of the a-Si(n⁺) layer only to carry out patterning for the contact layers **7**. By this etching operation the a-Si(n⁺) layer in the area in which the gate bus line **23** and addition capacity line **31** intersect the source bus line **11**, and the a-Si(n⁺) layer present between the contact layers **7** were simultaneously removed.

In this stage of etching, an upper gate line **3**, an anodized film **4**, a gate insulating film **5** and, in addition, a first protective layer **33a** of a-Si(i) and a second protective layer **33b** of SiNₓ are present one over another above the area in which each lower gate line **2** intersects a source bus line **11**. Similarly, an upper capacity bus line **30**, an anodized film **4**, a gate insulating film **5** and, in addition, a fourth protective layer **34a** of a-Si(i) and a fifth protective layer **34b** of SiNₓ are present one over another above the area in which each lower capacity bus line **29** intersects a source bus line **11**.

An upper gate line **3**, an anodized layer **4**, a gate insulating film **5**, a first protective layer **33a** of a-Si(i), a second protective layer **33b** of SiNₓ, a third protective layer **33c** of a-Si(n⁺), and a resist are present, one over another, above the area in which each lower gate line **2** does not intersect a source bus line **11**. Similarly, an upper capacity bus line **30**, an anodized layer **4**, a gate insulating film **5**, a fourth protective layer **34a** of a-Si(i), a fifth protective layer **34b** of SiNₓ, a sixth protective layer **34c** of a-Si(n⁺), and a resist are present, one over another, above the area in which each capacity bus line **29** does not intersect a source bus line **11**.

In this etching stage, too, since such numerous layers are present one over another, the lower gate line **2** and lower capacity bus line **29**, both of Mo metal, cannot easily be eroded.

Source electrodes **27**, drain electrodes **28**, and source bus lines **11** were pattern-formed by subjecting the Ti metal layer to an etching treatment, and then pixel electrodes **9** of ITO were pattern-formed by etching. In this stage of Ti metal and ITO etching, a good protective effect against the etchant was observed with respect to the first to third protective layers **33a, 33b, 33c** and the fourth to sixth protective layers **34a, 34b, 34c** as well. The active matrix display board shown in this example is obtainable after further steps as described in the foregoing Example 1.

The invention may be embodied in other specific forms without departure from the scope thereof as defined by the claims.

## Claims

1. An active matrix display board comprising:
a substrate (1);
pixel electrodes (9) disposed in a matrix on the substrate (1);
a plurality of gate lines (23) formed on the substrate (1), the gate lines (23) being in parallel to each other, each of the gate lines (23) comprising a lower gate line (2) and an upper gate line (3), the lower gate line (2) being formed of a metal having low resistivity, the upper gate line (3) being in direct contact with and completely covering the lower gate line (2) and being formed of a metal which is more resistant to corrosion than the metal of the lower gate line (2);
a plurality of source lines (11) formed on the substrate (1), the source lines (11) being parallel to each other and intersecting the gate lines (23);
an insulating film (5) formed on the gate lines (23) to insulate the source lines (11) from the gate lines (23); and
a plurality of thin film transistors (22) respectively formed in the vicinity of intersections of the source lines (11) and the gate lines (23), each of the thin film transistors including: a gate electrode (26) which branches from the upper gate line (3) and which is covered by the insulating film (5); a semiconductor layer (6) of an intrinsic semiconductor material formed on the gate electrode (26) with the insulating film (5) interposed therebetween; and a pair of contact layers (7) formed above and in contact with the semiconductor layer (6), one of the contact layers (7) being electrically connected to an adjacent one of the source lines (11), the other contact layer (7) being electrically connected to one of the pixel electrodes (9);
the active matrix display board being characterized by:
first protective layers (33;33a) disposed directly on the insulating film (5) so as to completely cover the gate lines (23), the first protective layers (33;33a) being formed from the same material as the semiconductor layer (6) of the thin film transistors (22).

2. An active matrix display board according to claim 1, further comprising second protective layers (33b) formed directly on the first protective layers (33a) so as to cover the gate lines (23) except where the gate lines (23) are intersected by the source lines (11), the second protective layers (33b) being formed from the same material as the contact layers (7) of the thin film transistors (22).

3. An active matrix board according to claim 1, further comprising:
second protective layers (33b) formed directly on the first protective layers (33a) so as to cover the gate lines (23), wherein the thin film transistor (22) further includes a semiconductor layer protective layer (10) consisting of an insulating material and formed directly on the semiconductor layer (6) between the contacts provided by the pair of contact layers (7), the second protective layers (33b) being formed from the same material as the semiconductor layer protective layer (10); and
third protective layers (33c) formed directly on the second protective layers (33b) so as to cover the gate lines (23) except where the gate lines (23) are intersected by the source lines (11), the third protective layers (33c) being formed from the same material as the contact layers (7) of the thin film transistors (22).

4. An active matrix display board according to any one of the preceding claims, further comprising a plurality of additional capacity lines (31) formed in parallel to the gate lines (23), a plurality of additional capacity electrodes (32) , and fourth protective layers (34;34a) formed directly on the insulating film (5) so as to completely cover the additional capacity lines (31), wherein each of the additional capacity lines (31) comprises a lower additional capacity line (29) and an upper additional capacity line (30) which are formed simultaneously with the lower gate line (2) and the upper gate line (3) of the gate lines (23), respectively, each of the additional capacity electrodes (32) being branched from the upper additional capacity line (30) and extending below one of the pixel electrodes (9) whereby an additional capacity (24) is formed therebetween, and wherein the fourth protective layers (34;34a) are formed from the same material as the first protective layers (33;33a).

5. An active matrix display board according to claim 4, as appendant to claim 2, further comprising fifth protective layers (34b) formed directly on the fourth protective layers (34a) so as to cover the additional capacity lines (31) except where the additional capacity lines (31) are intersected by the source lines (11), the fifth protective layers (34b) being formed from the same material as the second protective layers (33b).

6. An active matrix display board according to claim 4, as appendant to claim 3, further comprising fifth protective layers (34b) formed directly on the fourth protective layers (34a) so as to cover the additional capacity lines (31), the fifth protective layers (34b) being formed from the same material as the second protective layers (33b) , and sixth protective layers (34c) formed directly on the fifth protective layers (34b) so as to cover the additional capacity lines (31) except where the additional capacity lines (31) are intersected by the source lines (11), the sixth protective layers being formed of the same material as the third protective layers (33c).

## Patentansprüche

1. Aktivmatrix-Anzeigetafel mit:
- einem Substrat (1);
- Pixelelektroden (9), die in einer Matrix auf dem Substrat (1) angeordnet sind;
- einer Vielzahl von Gateleitungen (23), die auf dem Substrat (1) ausgebildet sind und parallel zueinander verlaufen, wobei jede der Gateleitungen (23) eine untere Gateleitung (2) und eine obere Gateleitung (3) aufweist, wobei die untere Gateleitung (2) aus einem Metall mit niedrigem spezifischem Widerstand besteht und die obere Gateleitung (3) in direktem Kontakt mit der unteren Gateleitung (2) steht und diese vollständig bedeckt, wobei sie aus einem Metall besteht, das gegen Korrosion beständiger ist als das Metall der unteren Gateleitung (2);
- einer Vielzahl von Sourceleitungen (11), die auf dem Substrat (1) ausgebildet sind und parallel zueinander verlaufen und die Gateleitungen (23) schneiden;
- einem Isolierfilm (5), der auf den Gateleitungen (23) ausgebildet ist, um die Sourceleitungen (11) gegen die Gateleitungen (23) zu isolieren; und
- einer Vielzahl von Dünnfilmtransistoren (22), die jeweils in der Nähe der Schnittstellen zwischen den Sourceleitungen (11) und den Gateleitungen (23) ausgebildet sind, wobei jeder der Dünnfilmtransistoren folgendes aufweist: eine Gateelektrode (26), die von der oberen Gateleitung (3) abzweigt und durch den Isolierfilm (5) bedeckt ist; eine Halbleiterschicht (6) aus einem eigenleitenden Halbleitermaterial, das auf der Gateelektrode (26) ausgebildet ist, wobei der Isolierfilm (5) dazwischen liegt; und ein Paar Kontaktschichten (7), die über der Halbleiterschicht (6) ausgebildet sind und mit dieser in Kontakt stehen, wobei eine der Kontaktschichten (7) elektrisch mit der benachbarten Sourceleitung (11) verbunden ist und wobei die andere Kontaktschicht (7) elektrisch mit einer der Pixelelektroden (9) verbunden ist;
- wobei diese Aktivmatrix-Anzeigeplatte durch folgendes gekennzeichnet ist:
- erste Schutzschichten (33; 33a), die unmittelbar mit dem Isolierfilm (5) so angeordnet sind, dass sie die Gateleitungen (23) vollständig bedecken, wobei sie aus demselben Material wie die Halbleiterschicht (6) der Dünnfilmtransistoren (22) ausgebildet sind.

2. Aktivmatrix-Anzeigeplatte nach Anspruch 1, mit zweiten Schutzschichten (33b), die unmittelbar so auf den ersten Schutzschichten (33a) ausgebildet sind, dass sie die Gateleitungen (23) bedecken, mit Ausnahme der Stellen, an denen die Gateleitungen (23) die Sourceleitungen (11) schneiden, wobei die zweiten Schutzschichten (33b) aus demselben Material wie die Kontaktschichten (7) der Dünnfilmtransistoren (22) ausgebildet sind.

3. Aktivmatrixtafel nach Anspruch 1, ferner mit:
- zweiten Schutzschichten (33b), die unmittelbar auf den ersten Schutzschichten (33a) so ausgebildet sind, dass sie die Gateleitungen (23) bedecken, wobei der Dünnfilmtransistor (22) ferner eine Halbleiter-Schutzschicht (10) aufweist, die aus einem isolierenden Material besteht und unmittelbar auf der Halbleiterschicht (6) zwischen den Kontakten ausgebildet ist, die durch das Paar Kontaktschichten (7) gebildet werden, wobei die zweiten Schutzschichten (33b) aus demselben Material wie die Halbleiterschicht-Schutzschicht (10) ausgebildet sind; und
- dritten Schutzschichten (33c), die unmittelbar auf den zweiten Schutzschichten (33b) so ausgebildet sind, dass sie die Gateleitungen (23) bedecken, mit Ausnahme der Stellen, an denen die Gateleitungen (23) von den Sourceleitungen (11) geschnitten werden, wobei die dritten Schutzschichten (33c) aus demselben Material wie die Kontaktschichten (7) der Dünnfilmtransistoren (22) ausgebildet sind.

4. Aktivmatrix-Anzeigetafel nach einem der vorstehenden Ansprüche, ferner mit einer Vielzahl zusätzlicher Kapazitätsleitungen (31), die parallel zu den Gateleitungen (23) ausgebildet sind, einer Vielzahl von Zusatzkapazitätselektroden (32) sowie vierten Schutzschichten (34; 34a), die unmittelbar so auf dem Isolierfilm (5) ausgebildet sind, dass sie die Zusatzkapazitätsleitungen (31) vollständig bedecken, wobei jede der Zusatzkapazitätsleitungen (31) eine untere Zusatzkapazitätsleitung (29) und eine obere Zusatzkapazitätsleitung (30) aufweist, die gleichzeitig mit der unteren Gateleitung (2) und der oberen Gateleitung (3) der Gateleitungen (23) hergestellt wurden, wobei jede der Zusatzkapazitätselektroden (32) von der oberen Zusatzkapazitätsleitung (30) abzweigt und sich unter eine der Pixelelektroden (9) erstreckt, wodurch dazwischen eine Zusatzkapazität (24) ausgebildet ist, und wobei die vierten Schutzschichten aus demselben Material wie die ersten Schutzschichten bestehen.

5. Aktivmatrix-Anzeigetafel nach Anspruch 4 in Abhängigkeit von Anspruch 2, ferner mit fünften Schutzschichten (34b), die unmittelbar so auf den vierten Schutzschichten (34a) ausgebildet sind, dass sie die Zusatzkapazitätsleitungen (31) bedecken, außer an den Stellen, an denen diese Zusatzkapazitätsleitungen (31) die Sourceleitungen (11) schneiden, wobei die fünften Schutzschichten (34b) aus demselben Material wie die zweiten Schutzschichten (33b) ausgebildet sind.

6. Aktivmatrix-Anzeigetafel nach Anspruch 4 in Abhängigkeit von Anspruch 3, ferner mit fünften Schutzschichten (34b), die unmittelbar auf den vierten Schutzschichten (34a) so ausgebildet sind, dass sie die Zusatzkapazitätsleitungen (31) bedecken, wobei die fünften Schutzschichten (34b) aus demselben Material wie die zweiten Schutzschichten (33b) ausgebildet sind, und wobei sechste Schutzschichten (34c) unmittelbar auf den fünften Schutzschichten (34b) so ausgebildet sind, dass sie die Zusatzkapazitätsleitungen (31) bedecken, außer an den Stellen, an denen diese Zusatzkapazitätsleitungen (31) die Sourceleitungen (11) schneiden, wobei die sechsten Schutzschichten aus demselben Material wie die dritten Schutzschichten (33c) ausgebildet sind.

## Revendications

1. Panneau d'affichage à matrice active comprenant :
un substrat (1) ;
des électrodes de pixel (9) disposées sous forme de matrice sur le substrat (1) ;
une pluralité de lignes de grille (23) formées sur le substrat (1), les lignes de grille (23) étant parallèles les unes aux autres, chacune des lignes de grille (23) comportant une ligne de grille inférieure (2) et une ligne de grille supérieure (3), la ligne de grille inférieure (2) étant constituée d'un métal de faible résistivité, la ligne de grille supérieure (3) étant en contact direct avec la ligne de grille inférieure (2) et la recouvrant complètement et étant constituée d'un métal plus résistant à la corrosion que le métal de la ligne de grille inférieure (2) ;
une pluralité de lignes de source (11) formées sur le substrat (1), les lignes de source (11) étant parallèles les unes aux autres et coupant les lignes de grille (23) ;
un film d'isolation (5) formé sur les lignes de grille (23) pour isoler les lignes de source (11) des lignes de grille (23) ; et
une pluralité de transistors à couches minces (22) formés respectivement au voisinage des intersections des lignes de source (11) et des lignes de grille (23), chacun des transistors à couches minces comportant : une électrode de grille (26) raccordée à la ligne de grille supérieure (3) et recouverte par le film d'isolation (5) ; une couche de semi-conducteur (6) constituée d'un matériau semi-conducteur intrinsèque formée sur l'électrode de grille (26), le film d'isolation (5) étant interposé entre elles ; et une paire de couches de contact (7) formée au-dessus et en contact avec la couche de semi-conducteur (6), une des couches de contact (7) étant connectée électriquement à une des lignes de source (11) adjacentes, l'autre couche de contact (7) étant électriquement connectée à l'une des électrodes de pixel (9) ;
le panneau d'affichage à matrice active étant caractérisé en ce que :
les premières couches de protection (33; 33a) sont disposées directement sur le film d'isolation (5) de manière à recouvrir complètement les lignes de grille (23), les premières couches de protection (33; 33a) étant constituées du même matériau que la couche de semi-conducteur (6) des transistors à couches minces (22).

2. Panneau d'affichage à matrice active selon la revendication 1, comprenant en outre des secondes couches de protection (33b) formées directement sur les premières couches de protection (33a) de manière à recouvrir les lignes de grille (23) à l'exception de l'emplacement où les lignes de grille (23) sont coupées par les lignes de source (11), les secondes couches de protection (33b) étant constituées du même matériau que les couches de contact (7) des transistors à couches minces (22).

3. Panneau d'affichage à matrice active selon la revendication 1, comprenant en outre :
des secondes couches de protection (33b) formées directement sur les premières couches de protection (33a) de manière à recouvrir les lignes de grille (23), où le transistor à couches minces (22) comprend en outre une couche de protection de la couche de semi-conducteur (10) constituée d'un matériau isolant et implantée directement sur la couche de semi-conducteur (6) entre les contacts fournis par la paire de couches de contact (7), les secondes couches de protection (33b) étant constituées du même matériau que la couche de protection de la couche de semi-conducteur (10) ; et
des troisièmes couches de protection (33c) formées directement sur les secondes couches de protection (33b) de manière à recouvrir les lignes de grille (23) sauf à l'emplacement où les lignes de grille (23) sont coupées par les lignes de source (11), les troisièmes couches de protection (33c) étant constituées du même matériau que les couches de contact (7) des transistors à couches minces (22).

4. Panneau d'affichage à matrice active selon l'une quelconque des revendications précédentes, comprenant en outre une pluralité de lignes de capacité additionnelle (31) formées parallèlement aux lignes de grille (23), une pluralité d'électrodes de capacité additionnelle (32), et des quatrièmes couches de protection (34; 34a) formées directement sur le film d'isolation (5) de manière à recouvrir complètement les lignes de capacité additionnelle (31), dans lequel chacune des lignes de capacité additionnelle (31) comporte une ligne de capacité additionnelle inférieure (29) et une ligne de capacité supérieure (30) qui sont formées simultanément à la ligne de grille inférieure (2) et à la ligne de grille supérieure (3) des ligne de grille (23), respectivement, chacune des électrodes de capacité additionnelle (32) étant connectée à la ligne de capacité supérieure (30) et se prolongeant sous une des électrodes de pixel (9) ce par quoi une capacité additionnelle (24) est constituée entre elles, et où les quatrièmes couches de protection (34; 34a) sont constituées du même matériau que les premières couches de protection (33; 33a).

5. Panneau d'affichage à matrice active selon la revendication 4, rattachée à la revendication 2, comprenant en outre des cinquièmes couches de protection (34b) formées directement sur les quatrièmes couches de protection (34a) de manière à recouvrir les lignes de capacité additionnelle (31) sauf à l'emplacement où les lignes de capacité additionnelle (31) sont coupées par les lignes de source (11), les cinquièmes couches de protection (34b) étant constituées du même matériau que les secondes couches de protection (33b).

6. Panneau d'affichage à matrice active selon la revendication 4, rattachée à la revendication 3, comprenant en outre des cinquièmes couches de protection (34b) formées directement sur les quatrièmes couches de protection (34a) de manière à recouvrir les lignes de capacité additionnelle (31), les cinquièmes couches de protection (34b) étant formées du même matériau que les secondes couches de protection (33b), et des sixièmes couches de protection (34c) formées directement sur les cinquièmes couches de protection (34b) de manière à recouvrir les lignes de capacité additionnelle (31) à l'exception de l'emplacement où les lignes de capacité additionnelle (31) sont coupées par les lignes de source (11), les sixièmes couches de protection étant constituées du même matériau que les troisièmes couches de protection (33c).
